# EUROPÄISCHE PATENTSCHRIFT

(11) **EP 4 149 731 B1**
(45) Veröffentlichungstag und Bekanntmachung des Hinweises auf die Patenterteilung: **24.04.2024**
(21) Anmeldenummer: 21731386.5
(22) Anmeldetag: 12.05.2021
(51) Int. Cl.: B25J 15/04

(54) **TRENNBARER ADAPTER UND VERFAHREN ZUM TRENNEN**
SEPARABLE ADAPTER AND SEPARATION METHOD
ADAPTATEUR SÉPARABLE ET PROCÉDÉ DE SÉPARATION

(30) Priorität: 13.05.2020 DE 102020002859
(43) Veröffentlichungstag der Anmeldung: 22.03.2023
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2021/000090
(87) Internationale Veröffentlichungsnummer: WO 2021/228297

(56) Entgegenhaltungen:
- DE-U1-202012 100 384
- US-A- 5 782 571
- US-A1- 2020 016 771
- US-B2- 7 806 395

## Beschreibung

Die Erfindung betrifft ein Verfahren zum manuellen oder automatisierten Trennen eines trennbaren Adapters mit einem ersten Teil und mit einem mit dem ersten Teil lösbar verbundenen zweiten Teil, sowie einen trennbaren Adapter für die Adaption eines Werkzeugs an einem Industrieroboter, mit einem ersten Teil und mit einem mit dem ersten Teil lösbar verbundenen zweiten Teil, wobei im zweiten Teil mindestens ein federbelastetes Verriegelungsteil verschiebbar oder verschwenkbar gelagert ist, das das erste Teil zumindest kontaktiert.

Aus der DK 2018 00149 A1 ist ein manuell betätigbarer Adapter bekannt. Dieser ist einseitig schwenkbar gelagert. Sein Betätigungselement wird beim schwenkenden Verschließen mittels einer Klemmverbindung gesichert. Aus der US 5 782 571 A ist ebenfalls ein gattungsgemäßer Adapter vorbekannt.

Der vorliegenden Erfindung liegt die Problemstellung zugrunde, einen trennbaren Adapter zu entwickeln, der sowohl manuell als auch automatisiert betätigt werden kann.

Diese Problemstellung wird mit den Merkmalen des Hauptanspruches gelöst. Dazu ist der Adapter ausgebildet mit mindestens zwei federbelastet das erste Teil oder das zweite Teil hintergreifenden Verriegelungsteilen, die in dem jeweils nicht hintergriffenen zweiten Teil oder ersten Teil verschiebbar oder verschwenkbar gelagert sind. Jedes der Verriegelungseiteile umgreift ein Führungselement umgreift, das in dem das Verriegelungsteil lagernden Teil angeordnet ist und das formschlüssig in jeweils eine Führungselementaufnahme eingreift, die in dem das Verriegelungsteil nicht lagernden Teil angeordnet ist. Um das erste Teil und das zweite Teil des Adapters voneinander zu trennen, werden alle Verriegelungsteile gleichzeitig relativ zum ersten Teil und zum zweiten Teil oder relativ zueinander mittels einer als Druckkraft aufgebrachten äußeren Kraft belastet. Jedes Verriegelungsteil wird mittels dieser äußeren Kraft relativ zum ersten Teil und zum zweiten Teil verschoben oder verschwenkt und hierbei wird die Belastung eines zumindest dieses Verriegelungsteil belastenden Federelements zusätzlich erhöht. Bei diesem Verschieben oder Verschwenken des einzelnen Verriegelungsteils löst sich der Hintergriff dieses Verriegelungsteils mit dem ersten Teil oder mit dem zweiten Teil. Das erste Teil und das zweite Teil werden entgegen einer in einer Längsrichtung des Adapters orientierten Montagerichtung voneinander getrennt, wobei die Führungselemente und die Führungselementaufnahmen außer Eingriff kommen.

Im trennbaren Adapter ist im ersten Teil oder im zweiten Teil mindestens ein zweites, federbelastetes Verriegelungsteil verschiebbar oder verschwenkbar gelagert. Jedes der Verriegelungsteile hintergreift dasjenige Teil, das dieses Verriegelungsteil nicht lagert. Jedes der Verriegelungsteile umgreift jeweils ein Führungselement, das in dem das Verriegelungsteil lagernden Teil angeordnet ist. Außerdem greift jedes der Führungselemente formschlüssig in jeweils eine Führungselementaufnahme ein, die in dem das Verriegelungsteil nicht lagernden Teil angeordnet ist.

Der trennbare Adapter bildet eine Schnittstelle zwischen einem Industrieroboter und z.B. einem Werkzeug. Hierbei ist ein Teil, z.B. das erste Teil, als Festteil roboterseitig und das andere Teil, z.B. das zweite Teil, als Losteil werkzeugseitig angeordnet. Um das Losteil vom Festteil zu trennen, werden beide Verriegelungsteile entgegen der Federkraft mittels einer äußeren Kraft direkt oder indirekt entgegen der als Verriegelungskraft wirkenden Federkraft belastet. Das Losteil kann nun z.B. in der Längsrichtung des Adapters herausgenommen werden.

Um ein Losteil mit dem Festteil zu verbinden, werden die Verriegelungsteile entgegen der Federkraft in eine Lösestellung verfahren. Das Losteil und das Festteil werden z.B. in der Längsrichtung des Adapters zueinander bewegt, bis sie ihre Betriebsposition erreichen. Mit dem Entlasten der Verriegelungsteile werden diese Verriegelungsteile mittels des Federelements oder der Federelemente verschoben, bis sie das Festteil hintergreifen.

Die mindestens zwei federbelasteten Verriegelungsteile können unabhängig voneinander, gruppenweise oder gemeinsam betätigbar sein. Die Führungselemente und die Führungselementaufnahmen bestimmen die Demontage- und die Montagerichtung. Damit ist sichergestellt, dass sowohl bei einem manuellen als auch bei einem automatischen Trennen und Fügen des Adapters alle Verriegelungsteile betätigt werden.

Weitere Einzelheiten der Erfindung ergeben sich aus den Unteransprüchen und der nachfolgenden Beschreibung schematisch dargestellter Ausführungsformen.
- Figur 1:: Trennbarer Adapter;
- Figur 2:: Unteransicht des Festteils;
- Figur 3:: Draufsicht des Festteils;
- Figur 4:: Grundkörper des Festteils;
- Figur 5:: Einsatzstück;
- Figur 6:: Unteransicht des Losteils;
- Figur 7:: Losteilkörper;
- Figur 8:: Verriegelungsteil;
- Figur 9:: Erstes Führungselement;
- Figur 10:: Zweites Führungselement;
- Figur 11:: Querschnitt des Adapters durch die Verriegelungsteile;
- Figur 12:: Losteil mit einer Betätigung;
- Figur 13:: Unteransicht des Losteils aus Figur 12;
- Figur 14:: Seitenansicht des Losteils aus Figur 12;
- Figur 15:: Schnitt A-A aus Figur 14.

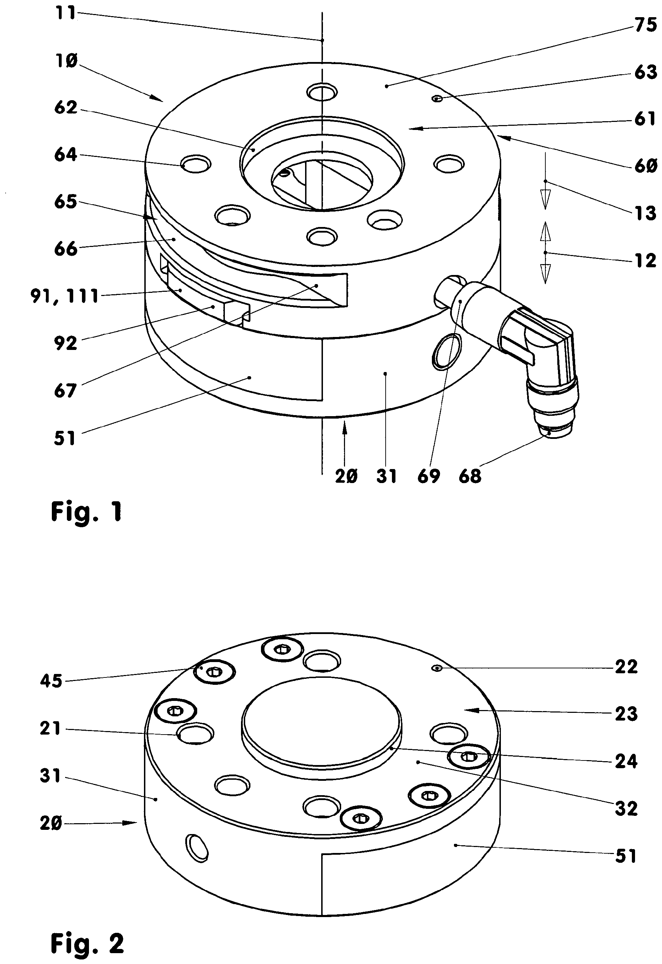

Die Figuren 1 - 11 zeigen einen trennbaren Adapter (10) und einige seiner Einzelteile. Derartige Adapter (10) werden eingesetzt, um einzelne Werkzeuge austauschbar an einem Industrieroboter zu befestigen. Die Werkzeuge können Handhabungswerkzeuge, Bearbeitungswerkzeuge, Messwerkzeuge, Kameras, etc. sein. Handhabungswerkzeuge sind beispielsweise Greifwerkzeuge, Schiebewerkzeuge, Ziehwerkzeuge, etc. Diese können elektrisch, pneumatisch oder hydraulisch betätigt sein. Bearbeitungswerkzeuge sind beispielsweise spanende oder spanlose Werkzeuge, z.B. Fräser, Bohrer, Sägen, Biegestempel, etc.

Der trennbare Adapter (10) hat ein erstes Teil (20) und ein am ersten Teil (20) lösbar angeordnetes zweites Teil (60). Das erste Teil (20), das z.B. als Festteil (20) ausgebildet ist, wird beispielsweise an einem Schwenkkopf eines Industrieroboters befestigt. Hierzu dient im Ausführungsbeispiel ein Bohrbild mit vier Befestigungsbohrungen (21) und einer Zentrierbohrung (22). An der z.B. untenliegenden Stirnseite (23) des Festteils (20) ist ein Zentrierbund (24) mit z.B. kreisförmiger Querschnittsfläche ausgebildet. Mittels dieses Zentrierbunds (24) und einem in der Zentrierbohrung (22) sitzenden Zentrierbolzen wird der Adapter (10) am Industrieroboter zentriert.

An dem z.B. als Losteil (60) ausgebildeten zweiten Teil (60) wird das Werkzeug befestigt. Hierzu hat das Losteil (60) an seiner Stirnseite (61) eine Werkzeugaufnahme (62) und eine z.B. ebene Auflagefläche (75). Weiterhin hat die Stirnseite (61) des Losteils (60) eine Zentrierausnehmung (63) und ein Befestigungsbohrbild (64). Hiermit kann das Werkzeug am Losteil (60) mittels Schrauben befestigt werden. Die Stirnseite (23) des Festteils (20) ist im Ausführungsbeispiel komplementär zur Stirnseite (61) des Losteils (60) ausgebildet. Es ist daher denkbar, das Werkzeug ohne Einsatz des Adapters (10) direkt am Industrieroboter zu befestigen.

Der trennbare Adapter (10) hat im Ausführungsbeispiel eine zumindest annähernd zylindrische Hüllkontur. Aus der Mantelfläche dieser Hüllkontur ragen im Ausführungsbeispiel zwei Verriegelungsteile (91) heraus. Diese beiden Verriegelungsteile (91) sind z.B. einander gegenüber am Losteil (60) angeordnet. Sie sind in einer Ebene normal zur Längsachse des Adapters (10) beispielsweise um 180 Grad versetzt zueinander angeordnet. Auch ein anderer Versatzwinkel der beiden Verriegelungsteile (91) relativ zueinander ist denkbar. Beispielsweise können sie in einem Bereich von um 90 Grad bis zu dem oben genannten Winkelzueinander versetzt sein. Die Verriegelungsteile (91, 111) haben radial nach außen zeigende Griffflächen (92). Diese Griffflächen (92) können eben oder gewölbt ausgebildet sein.

Oberhalb jedes Verriegelungsteils (91) hat das Losteil (60) je eine Greifausnehmung (65). Die einzelne Greifausnehmung (65) hat beispielsweise eine kreisabschnittsförmige Grundfläche (66) und eine konstante Höhe. Die Führungsflächen (67) beider Greifausnehmungen (65) sind zumindest bereichsweise parallel zueinander orientiert.

Am Losteil (60) ist im Ausführungsbeispiel ein elektrisches Kabel (68) mittels eines Steckers (69) angeschlossen. Hierüber können beispielsweise Steuer- und/oder Kontrollsignale zwischen dem Industrieroboter und dem Werkzeug ausgetauscht werden.

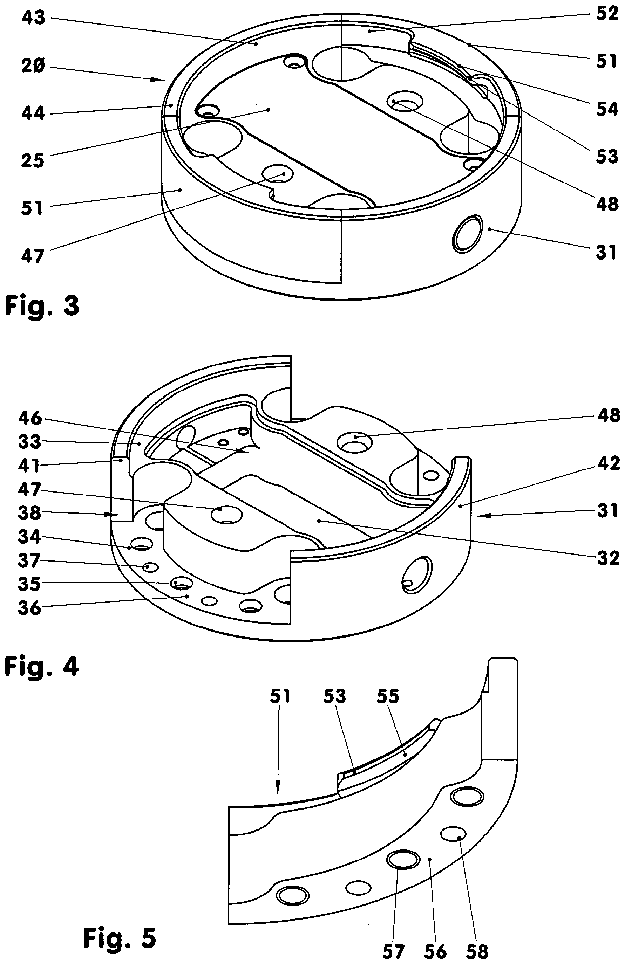

Die Figuren 2 und 3 zeigen das Festteil (20) in einer Draufsicht und in einer Unteransicht. Das Festteil (20) ist schalenförmig aufgebaut und hat eine zylindrische Außenwandung. Es hat einen Grundkörper (31), vgl. Figur 4, und zwei in den Grundkörper (31) eingesetzte Einsatzstücke (51), vgl. Figur 5. Ein Verschlussdeckel (25) verschließt einen Zentralbereich (46) des Festteils (20).

Der Grundkörper (31) hat einen Boden (32) und zwei außenliegende Wandbereiche (33). Zwischen den Wandbereichen (33) sind Einsenkungen (38) zur Aufnahme der Einsatzstücke (51) ausgebildet. Im Ausführungsbeispiel haben die beiden Einsenkungen (38) die gleiche Größe. Den Boden (32) durchdringen außer den Befestigungsbohrungen (21) zwei Gruppen (34) von jeweils drei Senkbohrungen (35). Diese Senkbohrungen (35) münden in Aufsetzflächen (36) der Einsenkungen (38). Zwischen den Senkbohrungen (35) sind Zentrierbohrungen (37) eingebracht.

Die Wandbereiche (33) sind zweistufig aufgebaut. Der an den Boden (32) angrenzende Bereich ist als Zylindermantel (42) ausgebildet. Auf dem Zylindermantel (42) sitzt ein Randsteg (43). Dieser Randsteg (43) bildet einen Teil einer Ringzentrierung (43, 81). Seine dem Boden (32) abgewandte Seite ist als ebene Fläche (44) ausgebildet. Die Ebene ist normal zur Längsachse (11) orientiert.

Die beiden Einsenkungen (38) überdecken jeweils einen Sektorwinkel von 90 Grad. Die in der Längsrichtung (12) orientierten Begrenzungsflächen (41) der Einsenkungen (38) sind beispielsweise radial zur Längsachse (11) orientiert.

Der Grundkörper (31) weist außerdem zwei außermittig angeordnete Führungselementaufnahmen (47, 48) auf. Diese Führungselementaufnahmen (47, 48) haben beispielsweise die gleiche Tiefe. Sie sind parallel zur Längsachse (11) orientiert. Die Führungselementaufnahmen (47, 48) haben unterschiedliche Querschnitte. In den Darstellungen der Figuren 3 und 4 hat die links dargestellte Führungselementaufnahme (47) eine kleinere Querschnittsfläche als die rechts dargestellte Führungselementaufnahme (48).

Der Grundkörper (31) ist im Ausführungsbeispiel aus Aluminium hergestellt. Der Elastizitätsmodul dieses Werkstoffs beträgt beispielsweise 70000 Newton pro Quadratmillimeter.

Die beiden Einsatzstücke (51) sind im Ausführungsbeispiel identisch zueinander ausgebildet. Sie haben eine schalenabschnittsförmige Gestalt. Im oberen Bereich (52) weisen sie eine nach innen gerichteten Umgriffsrand (53) auf. Dieser Umgriffsrand (53) überdeckt einen Sektor von beispielsweise 36 Grad. Jeder Umgriffsrand (53) ist im Querschnitt keilförmig ausgebildet. Seine Oberseite (54) und seine Unterseite (55) schließen im Ausführungsbeispiel einen Winkel von 5 Grad ein. Die Scheitellinie dieses Winkels ist in Richtung der Längsachse (11) orientiert. Die Oberseite (54) liegt bei montiertem Einsatzstücken (51) in der Ebene der ebenen Fläche (44) der Randstege (43). Außerhalb und unterhalb des Umgriffsrandes (53) entspricht der Innendurchmesser der Einsetzstücke (51) dem Innendurchmesser des Randes (33) des Grundkörpers (31). Der Außendurchmesser der Einsatzstücke (51) entspricht dem Außendurchmesser des Grundkörpers (31). Im ihrer Bodenfläche (56) haben die Einsatzstücke (51) jeweils drei Gewindebohrungen (57) und zwei Zentrierbolzenaufnahmen (58).

Die Einsatzstücke (51) sind im Ausführungsbeispiel aus Stahl hergestellt. Der Elastizitätsmodul dieses Werkstoffs beträgt 210.000 Newton pro Quadratmillimeter. Dieser Elastizitätsmodul beträgt damit das Dreifache des Elastizitätsmoduls des Grundkörpers (31). Die Werkstoffe können so gewählt sein, dass der Elastizitätsmodul der Einsatzstücke (51) mehr als das Doppelte des Elastizitätsmoduls des Grundkörpers (31) beträgt. Es ist auch denkbar, die Einsatzstücke (51) als Austauschteile einzusetzen. Hierfür können sie beispielsweise aus einem Kunststoff hergestellt sein.

Beim Zusammenbau des Festteils (20) wird jedes der Einsatzstücke (51) in eine Einsenkung (38) eingesetzt. Zentrierbolzen und in die Senkbohrungen (35) eingesetzte Befestigungsschrauben (45) halten und sichern die Einsatzstücke (51). In den Zentralbereich (46) des Bodens kann beispielsweise eine elektrische Baugruppe eingesetzt werden. Dieser Zentralbereich (46) wird anschließend beispielsweise mittels des Verschlussdeckels (25) verschlossen.

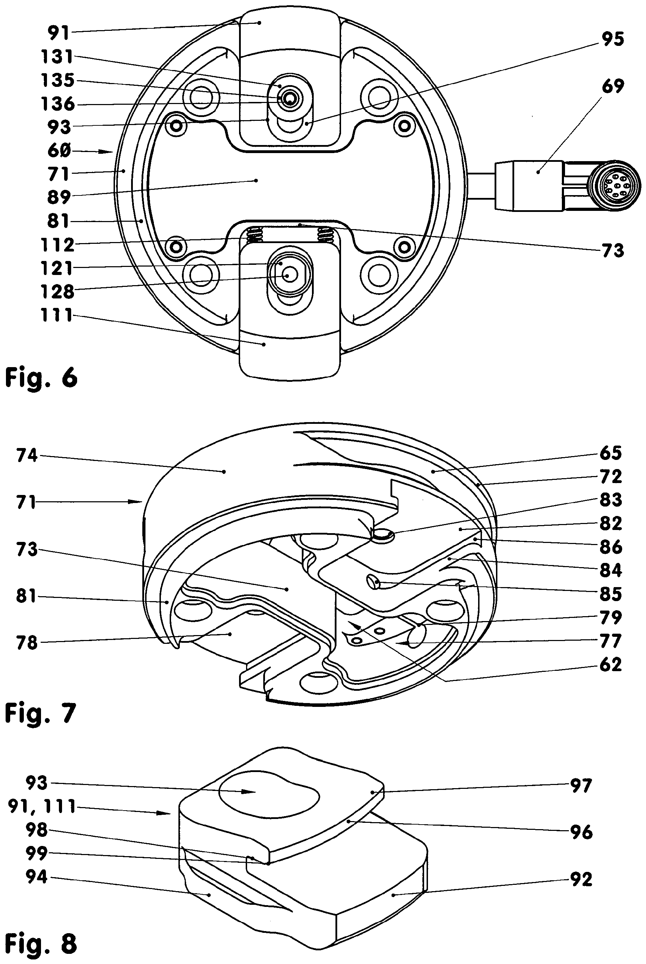

In der Figur 6 ist eine Unteransicht des Losteils (60) dargestellt. Das Losteil (60) umfasst einen Losteilkörper (71), zwei z.B. als Führungsbolzen (121, 131), Stifte oder Kegel ausgebildete Führungselemente (121, 131) und die zwei Verriegelungsteile (91, 111). Ein Deckelblech (89) verschließt die Innenseite der Werkzeugaufnahme (62). Die beiden Verriegelungsteile (91, 111) sind einander gegenüber angeordnet. Jedes der Verriegelungsteile (91; 111) ist im Losteilkörper (71) und in jeweils einem Führungsbolzen (121; 131) radial verschiebbar geführt. Für die Führung entlang der Führungsbolzen (121; 131) hat das einzelne Verriegelungsteil (91; 111) jeweils ein Führungslangloch (93). Jedes der Verriegelungsteile (91; 111) ist dabei mittels zweier Federelemente (112) abgestützt. Diese z.B. als Druckfedern (112) ausgebildeten Federelemente (112) belasten jeweils ein Verriegelungsteil (91; 111) radial nach außen. Die Federelemente (112) stützen sich hierbei jeweils an einem Abstützsteg (73) des Losteilkörpers (71) ab.

In der Darstellung der Figur 6 ist das obere Verriegelungsteil (91) eingeschoben dargestellt. Beispielsweise ist die Grifffläche (92) nahezu bündig zur Hüllkontur des Losteils (60). Hierbei sind die Druckfedern komprimiert. Der Hub des Verriegelungsteils (91) ist durch das Führungslangloch (93) und den Führungsbolzen (131) begrenzt.

Das untere Verriegelungsteil (111) ist in der Darstellung der Figur 6 mittels der Druckfedern (112) nach außen verschoben. Der Hub des Verriegelungsteils (111) in der äußeren Endlage ist mittels des Führungsbolzens (121) und des Führungslanglochs (93) begrenzt.

Die Figur 7 zeigt den Losteilkörper (71). Er hat ein Deckelteil (72) und einen Losteilkörperrand (74). Das Deckelteil (72) hat eine ebene Auflagefläche (75), vgl. Figur 1. In ihr ist ein Durchbruch für die Werkzeugaufnahme (62) eingebracht. Auf der Innenseite (77), vgl. Figur 7, grenzen die Abstützstege (73) die zentral angeordnete Werkzeugaufnahme (62) von zwei einander gegenüberliegenden Verriegelungsteil-Aufnahmen (78) ab. Der Losteilkörper (71) ist beispielsweise aus dem gleichen Werkstoff hergestellt wie der Grundkörper (31).

In die Werkzeugaufnahme (62) mündet ein Kabelkanal (79), an dessen Außenseite in den Darstellungen der Figuren 1 und 6 der Stecker (69) angeschlossen ist. Die Werkzeugaufnahme (62) ist umgeben vom Losteilkörperrand (74). Dieser ist zweistufig ausgebildet. Der in der Figur 7 nach unten herausragende Randbereich ist als Zentrierring (81) ausgebildet. Bei zusammengebauten Adapter (10) bildet er Teil einer Ringzentrierung (43, 81).

Die Verriegelungsteil-Aufnahmen (78) haben jeweils eine ebene Gleitfläche (82). Die beiden Gleitflächen (82) liegen in einer gemeinsamen Ebene. Diese Ebene ist parallel zur Auflagefläche (75) des Losteils (60). In jeder der Gleitflächen (82) ist jeweils eine Gewindebohrung (83) eingebracht. Die jeweilige Gewindebohrung (83) liegt beispielsweise mittig zwischen den beiden Längsseiten (84) der Verriegelungsteil-Aufnahme (78). In jeder dieser Gewindebohrungen (83) wird einer der Führungsbolzen (121; 131) eingeschraubt. In den Abstützstegen (73) sind Federaufnahmen (85) eingeprägt. In diesen sitzen bei montiertem Losteil (60) die Druckfedern (112). In den Längsseiten (84) sind angrenzend an die Gleitflächen (82) Führungsnuten (86) ausgebildet.

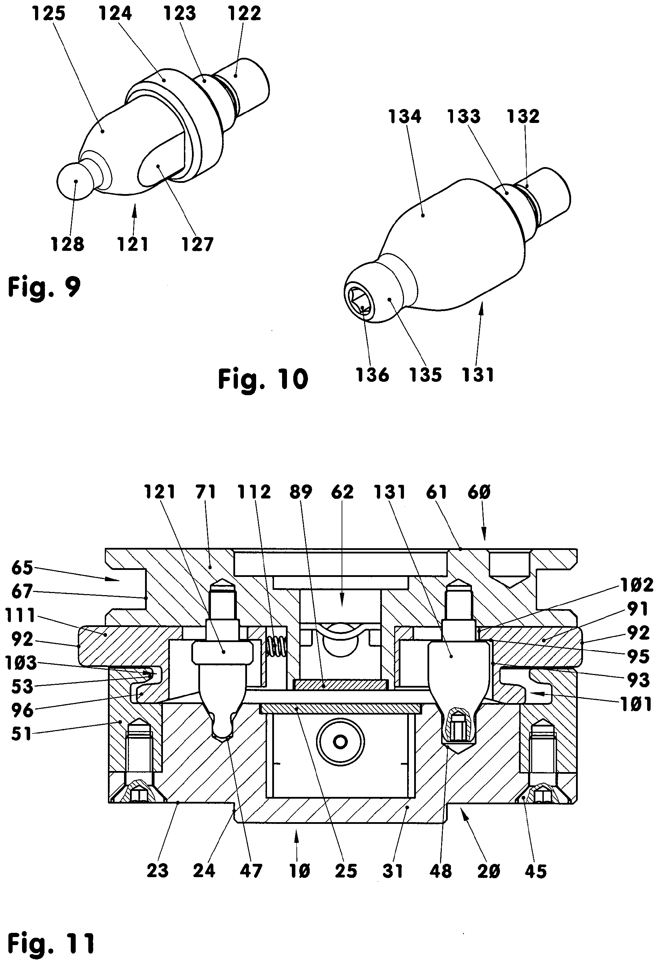

In der Figur 8 ist ein Verriegelungsteil (91; 111) dargestellt. Im Ausführungsbeispiel sind beide Verriegelungsteile (91; 111) identisch ausgebildet. Es ist aber auch denkbar, die beiden Verriegelungsteile (91, 111) z.B. mit unterschiedlicher Breite auszubilden. Das einzelne Verriegelungsteil (91; 111) hat das zentrale Führungslangloch (93) und zwei seitliche Führungsleisten (94). Das Führungslangloch (93) ist radial zur Längsachse (11) des Adapters (10) orientiert. Die Führungsleisten (94) liegen parallel zum Führungslangloch (93). Bei montiertem Losteil (60) sind die Führungsleisten (94) in den Führungsnuten (86) geführt. Das Führungslangloch (93) umgreift den jeweiligen Führungsbolzen (121; 131). Das einzelne Führungslangloch (93) ist mit einer Einsenkung (95) ausgebildet, vgl. Figuren 6 und 11.

An seiner Außenseite hat das Verriegelungsteil (91; 111) die Grifffläche (92). Oberhalb der Grifffläche (92) und zu dieser beabstandet ist in der Darstellung der Figur 8 ein auskragender Haken (96) angeordnet. Die Grifffläche (92) steht hierbei um 30 % der in radialer Richtung gemessenen Bauteillänge über den Haken (96) heraus. Der Haken (96) ist in einer Draufsicht auf das Verriegelungsteil (91; 111) bogenförmig ausgenbildet. Die Bogenlänge beträgt in einer Normalenebene zur Längsachse (11) 38 Grad. Der Haken (96) ist im Querschnitt keilförmig ausgebildet. Der Keilwinkel zwischen der Hakenoberseite (97) und der Hakenunterseite (98) beträgt im Ausführungsbeispiel 5 Grad. Dies ist auch die Größe des Winkels, den die Hakenunterseite (98) mit einer Normalenebene zur Längsachse (11) einschließt. An seinem freien Ende hat der Haken (96) eine an die Hakenunterseite (98) angrenzende Einführschräge (99). Der Winkel zwischen der Einführschräge (99) und der Hakenoberseite (97) beträgt im Ausführungsbeispiel 30 Grad. An seiner zur Längsachse (11) orientierten Rückseite kann das Verriegelungsteile (91; 111) Federaufnahmen aufweisen. Diese sind beispielsweise so ausgebildet wie die Federaufnahmen in den Abstützstegen (73). Die beiden Verriegelungsteile (91, 111) sind im Ausführungsbeispiel aus dem gleichen Werkstoff hergestellt wie die Einsatzstücke (51).

Die Figuren 9 und 10 zeigen die beiden Führungsbolzen (121, 131) des Ausführungsbeispiels. Die beiden Führungsbolzen (121, 131) haben unterschiedliche Gestalten. Der in der Figur 9 dargestellte Führungsbolzen (121) wird im Folgenden als erster Führungsbolzen (121) bezeichnet. Die Figur 10 zeigt dann den zweiten Führungsbolzen (131). Die beiden Führungsbolzen (121, 131) haben beispielsweise die gleiche Länge. Im Ausführungsbeispiel sind sie aus dem gleichen Werkstoff hergestellt wie die Einsatzstücke (51).

Der erste Führungsbolzen (121) hat ein Außengewinde (122), dessen Nennmaß dem Nennmaß der Gewindebohrungen (83) entspricht. An das Außengewinde (122) schließt ein Führungsbund (123) an, dessen Durchmesser größer ist als das Nennmaß der Gewindebohrung (83). Der Durchmesser des Führungsbundes (123) ist kleiner als die freie Breite des Führungslanglochs (93). An den Führungsbund (123) grenzt ein Auflagebund (124) an. Dieser Auflagebund (124) verhindert bei montiertem Verriegelungsteil (91; 111) u.a. ein Abheben oder Verkanten des Verriegelungsteils (91; 111) relativ zum Losteilkörper (71).

An den Auflagebund (124) des ersten Führungsbolzens (121) grenzt ein Montageabschnitt (125) an. Dieser hat im Ausführungsbeispiel zwei an seiner Mantelfläche angeordnete, zueinander parallele Schlüsselflächen (127). An den Montageabschnitt (125) schließt ein Führungsbolzenkopf (128) an. Dieser ist im Ausführungsbeispiel kalottenförmig ausgebildet.

Der zweite Führungsbolzen (131) hat ebenfalls ein Außengewinde (132) und einen Führungsbund (133). Diese sind so ausgebildet wie die entsprechenden Bereiche des ersten Führungsbolzens (121). Der Auflagebund (134) des zweiten Führungsbolzens (131) ist beispielsweise so lang ausgebildet wie die Summe der Längen des Auflagebunds (124) und des Montageabschnitts (125) des ersten Führungsbolzens (121). Der Führungsbolzenkopf (135) des zweiten Führungsbolzens (131) ist ebenfalls kalottenförmig ausgebildet. Sein Durchmesser ist jedoch größer als der Durchmesser des Führungsbolzenkopfs (128) des in der Figur 9 dargestellten Führungsbolzens (121). An seiner Stirnfläche hat der zweite Führungsbolzen (131) einen Innensechskant (136).

Beim Zusammenbau des Losteils (60) werden die Federelemente (112) in die Federaufnahmen (85) des Losteilkörpers (71) und der Verriegelungsteile (91; 111) eingesetzt. Die Verriegelungsteile (91, 111) werden in die Verriegelungsteil-Aufnahmen (78) eingeschoben, wobei die Führungsleisten (94) in den Führungsnuten (86) geführt werden. Hierbei werden die Federelemente (112) zusammengedrückt.

In das einzelne Verriegelungsteil (91; 111) wird ein Führungsbolzen (121; 131) eingesetzt. Dieser wird durch das Führungslangloch (93) des Verriegelungsteils (91; 111) hindurchgeschoben und in die zugehörigen Gewindebohrungen (83) eingeschraubt. Nach dem Loslassen der Verriegelungsteile (91, 111) werden diese mittels der Federelemente (112) nach außen geschoben. Der Haken (96) des einzelnen Verriegelungsteils (91; 111) zeigt nach außen. Im Losteilkörper (71) wird das Deckelblech (89) befestigt und an der Außenseite des Losteilkörpers (71) wird der Stecker (69) montiert. In das Losteil (60) kann abschließend ein Werkzeug eingesetzt werden und an diesem befestigt werden.

Um den Adapter (10) zu fügen, wird das Losteil (60) mit dem Festteil (20) verbunden. Dies kann manuell oder mittels einer Greifvorrichtung erfolgen. Beide Verriegelungsteile (91, 111) werden eingedrückt und damit das Losteil (60) gegriffen. Beim Einsatz einer Greifvorrichtung kann das Losteil (60) zusätzlich an den Greifausnehmungen (65) gehalten werden. Das Losteil (60) wird so an das Festteil (20) angesetzt, dass die Einsatzstücke (51) und die Verriegelungsteile (91; 111) übereinander stehen und der Zentrierring (81) des Losteils (60) innerhalb des Randstegs (43) des Festteils (20) steht. Beim weiteren Annähern des Losteils (60) an das Festteil (20) in der in der Längsrichtung (12) orientierten Montagerichtung (13) tauchen die Führungsbolzen (121, 131) in die Führungsbolzenaufnahmen (47, 48) des Festteils (20) ein. Aufgrund der unterschiedlichen geometrischen Ausbildung der beiden Führungsbolzen (121, 131) und der zugehörigen Führungsbolzenaufnahmen (47, 48) kann das Losteil (60) nur in einer Position auf das Festteil (20) geschoben werden. Auch andere strukturelle Lösungen zur Sicherstellung der radialen Orientierung des Losteils (60) relativ zum Festteil (20) sind denkbar. Sobald die Führungsbolzen (121, 131) in die Führungsbolzenaufnahmen (47, 48) eingetaucht sind, ist kein weiteres Verschieben des Losteils (60) relativ zum Festteil (20) in der Montagerichtung (13) möglich. Die in die Führungsbolzenaufnahmen (47, 48) eingesetzten Führungsbolzen (121, 131) zentrieren das Losteil (60) relativ zum Festteil (20) formschlüssig.

Die Figur 11 zeigt den Adapter (10) bei der Montage in einer Schnittdarstellung. Die beiden Führungsbolzen (121, 131) sitzen in den Führungsbolzenaufnahmen (47, 48). Das rechte Verschlussteil (91) ist in der Lösestellung (101) dargestellt. Dieses rechte Verschlussstück (91) liegt mit seinem Löseanschlag (102) am Führungsbolzen (131) an. Der Haken (96) liegt innerhalb des vom Umgriffsrand (53) begrenzten Zylinderabschnitts.

Beim Loslassen der Verriegelungsteile (91, 111) werden diese mittels der Federelemente (112) nach außen verschoben. Hierbei fährt der Haken (96) an den Umgriffsrand (53). Der Haken (96) gleitet mit seiner Hakenunterseite (98) entlang der Unterseite (55) des Umgriffsrands (53). Die beiden Keile ziehen das Losteil (60) und das Festteil (20) weiter in der Montagerichtung (13) zusammen. In der Darstellung der Figur 11 steht das linke Verschlussstück (111) in der Verriegelungsstellung (103). Der Haken (96) hintergreift den Umgriffsrand (53). Das Losteil (60) ist relativ zum Festteil (20) kraft- und formschlüssig gesichert.

Mit dem Fügen des Adapters (10) kann das Festteil (20) beispielsweise auch pneumatisch mit dem Losteil (60) verbunden werden. Hierzu können z.B. elastisch verformbare pneumatische Anschlüsse dienen, die beim Fügen komprimiert werden. Auch ist es denkbar, die pneumatische Verbindung durch die Führungsbolzen (121; 131) hindurch zu leiten. Auch können beim Fügen des Adapters (10) innerhalb des Adapters (10) z.B. elektrische und/oder hydraulische Leitungen miteinander verbunden werden. Damit können dann beispielsweise Laststrom, Signale, Daten, hydraulisches Medium, etc. übertragen werden, vgl. DE 10 2017 009 319 B3.

Beim Betrieb des am Adapter (10) angeordneten Werkzeugs werden die Betriebskräfte über den Adapter (10) übertragen. In axialer Richtung werden die Kräfte über die Führungsbolzen (121, 131) übertragen. Hierbei werden diese axialen Kräfte von den Führungsbünden (123, 133) über die Führungsbolzenköpfe (128, 135) in den Boden (32) des Festteils (20) geleitet.

Querkräfte auf das Werkzeug werden ebenfalls über die Führungsbolzen (121, 131) geleitet. Diese Kräfte werden außerdem über die Verriegelungsteile (91, 111) und gegebenenfalls auch über die Ringzentrierung (43, 81) übertragen.

Drehmomente zwischen dem Festteil (20) und dem Losteil (60) werden im Wesentlichen über die Führungsbolzen (121, 131) übertragen. Die Reibung der kraftschlüssigen Verbindung zwischen den Verriegelungsteilen (91, 111) und den Umgriffsrändern (53) trägt ebenfalls zur Momentenübertragung bei.

Zum Wechseln des Werkzeugs wird der Adapter (10) getrennt. Dies kann manuell oder automatisch erfolgen.

Bei einem manuellen Werkzeugwechsel presst der Bediener die beiden Verriegelungsteile (91, 111) nach innen. Die Verriegelungsteile (91, 111) lösen sich von den Umgriffsrändern (53). Das Werkzeug kann nun zusammen mit dem Losteil (60) vom Festteil (20) entgegen der Montagerichtung (13) abgenommen werden. Beispielsweise wird es in einem Magazin gelagert. Hierbei kann das Losteil (60) in den Greifausnehmungen (65) gehalten werden. Anschließend kann ein neues Werkzeug mit daran angeordnetem Losteil (60) aus dem Magazin entnommen werden. Die Montage am Festteil (20) erfolgt, wie oben beschrieben.

Bei einem automatischen Werkzeugwechsel kann das Losteil (60) z.B. mittels eines starren Gabelgreifers zunächst in den Greifausnehmungen (65) gehalten werden. Ein Greifer mit beweglichen Greifbacken presst die beiden Verriegelungsteile (91, 111) relativ zueinander. Das Trennen des Losteils (60) vom Festteil (20) erfolgt, wie oben beschrieben. Auch in diesem Fall kann das entnommene Werkzeug mit dem daran befestigten Losteil (60) in ein Magazin eingesetzt werden. Nach dem Einsetzen des Losteils (60) in das Magazin werden die Greifbacken des Greifers entlastet. Die Verriegelungsteile (91, 111) des Losteils (60) verfahrene in ihre ausgefahrene Grundstellung. Das neue Werkzeug mit einem daran befestigten Losteil (60) kann ebenfalls mittels des Greifers mit beweglichen Greifbacken aus dem Magazin entnommen werden. Beim Greifen des Losteils (60) pressen die Greifbacken die Verriegelungsteile (91, 111) zusammen. Das Losteil (60) mit dem daran befestigten Werkstück wird an das Festteil (20) angesetzt, wie oben beschrieben. Nachdem das Losteil (60) bei eingedrückten Verriegelungsteilen (91, 111) den Anschlag am Festteil (20) erreicht hat, werden die Greifbacken entlastet. Die Verriegelungsteile (91, 111) hintergreifen die Umgriffsränder (53) und sichern das Losteil (60) am Festteil (20).

Für einen automatischen oder einen manuellen Werkzeugwechsel kann der Adapter (10) auch in eine Entriegelungsaufnahme eingeschoben werden. Diese greift beispielsweise in die Greif- oder Führungsausnehmung (65) ein. Die Entriegelungsaufnahme ist beispielsweise keilförmig ausgebildet. Beim Einschieben des Adapters (10) in die Entriegelungsaufnahme werden die beiden Verriegelungsteile (91, 111) betätigt. Hierbei können die Betätigungselemente (91, 111) geringfügig gegeneinander versetzt sein oder bis zu einem Halbkreiswinkel zueinander versetzt angeordnet sein. Das Trennen des ersten Teils (20) und des zweiten Teils (60) erfolgt dann wie oben beschrieben.

Die Betätigung der Verriegelungsteile (91, 111) kann auch z.B. von einer der Stirnseiten (23, 24) aus erfolgen. Beispielsweise werden die Verriegelungsteile (91, 111) hierbei beim Eindrücken von Keilschiebern nach innen verschoben. Die äußere Kraft wird in diesem Fall mittels eines Keilgetriebes auf die Verriegelungsteile (91, 111) übertragen. Das Trennen des ersten Teils (20) und des zweiten Teils (60) erfolgt dann, wie oben beschrieben.

Die Betätigung der Entriegelung kann auch mittels eines einzelnen Drucktasters erfolgen. Beim Eindrücken dieses Tasters werden alle Verriegelungsteile (91, 111) unter zusätzlicher Belastung der Federelemente (112) gleichzeitig verschoben. Hierbei lösen sich die jeweiligen formschlüssigen Hintergriffe.

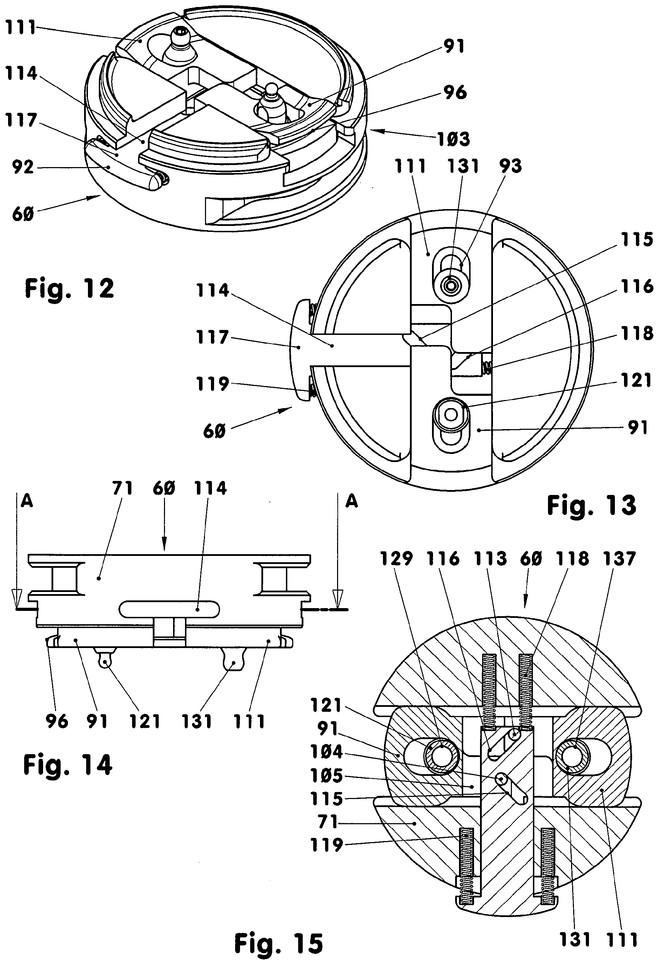

Die Figuren 11 - 15 zeigen eine Variante eines Losteils (60) mit zwei Verriegelungsteilen (91, 111), die gemeinsam mittels eines Tasters (114) betätigbar sind. Die äußeren Abmessungen des Losteils (60) entsprechen den äußeren Abmessungen des in der Figur 6 dargestellten Losteils (60). Beispielsweise kann das in den Figuren 11 - 15 dargestellte Losteil (60) mit dem in den Figuren 2 und 3 dargestellten Festteil (20) kombiniert werden.

Die beiden Verriegelungsteile (91, 111) sind jeweils sind im Losteil (60) verschiebbar gelagert und mittels der im Losteil (60) befestigten Führungselemente (121, 131) geführt. Die Führungselemente (121, 131) sind z.B. hohl mit einem innenliegenden Kanal (129, 137) ausgebildet. Das jeweilige Führungslangloch (93) und die Haken (96) sind so ausgebildet wie im Zusammenhang mit dem ersten Ausführungsbeispiel beschrieben. Jedes der Verriegelungsteile (91; 111) hat einen Mitnahmezapfen (104; 113), der jeweils in ein Mitnahmelangloch (115; 116) des Tasters (114) eingreift. Der einzelne Mitnahmezapfen (104; 113) sitzt auf einem Steg (105) des Verriegelungsteils (91; 111).

Der Taster (114) hat ein radial nach außen aus dem Losteil (60) herausragendes Griffteil (117) mit einer Griffläche (92). Er ist im Ausführungsbeispiel mittels vier Federelementen (118, 119) in die ausgefahrene Stellung belastet. Zwei dieser als Druckfedern (118) ausgebildeten Federelemente (118) stützen den Körper des Tasters (114) gegen den Losteilkörper (71) ab. Die anderen beiden, ebenfalls als Druckfedern (119) ausgebildeten Federelemente (119), sind zwischen dem Losteilkörper (71) und dem Griffteil (117) angeordnet. Die beiden Mitnahmelanglöcher (115, 116) sind im Ausführungsbeispiel V-förmig zueinander angeordnet. Der von den beiden Mitnahmelanglöchern (115, 116) eingeschlossene Winkel beträgt beispielsweise 90 Grad. Die Mitnahmezapfen (104, 113) liegen jeweils am dem dem Haken (96) zugewandten Ende des Mitnahmelanglochs (115, 116).

In der dargestellten Verriegelungsstellung (103) drücken die Federelemente (118, 119) über die Zwangsführung (104, 115; 113, 116) der Mitnahmelanglöcher (115, 116) und der Mitnahmezapfen (104, 113) beide Verriegelungsteile (91, 111) z.B. radial nach außen. Alle Druckfedern (118, 119) sind gegenüber ihrem entspannten Zustand teilbelastet und teilkomprimiert. Wird der Taster (114) mittels einer äußeren Druckkraft eingeschoben, wird die Belastung der Druckfedern (118, 119) erhöht. Der Taster (114) verschiebt über die Zwangsführungen (104, 115; 113, 116) beide Verriegelungsteile (91, 111) zur Mitte hin. Beispielsweise lösen sich die Haken (96) der Verriegelung. Nach der Wegnahme der manuell oder automatisiert aufgebrachten äußeren Kraft werden die Verriegelungsteile (91, 111) wieder federbelastet in die Verriegelungsstellung (103) verschoben.

Das einzelne federbelastete Verriegelungsteil (91; 111) kann auch in einer Schwenkbewegung z.B. um die Längsachse (11) das Festteil (20) oder das Losteil (60) hintergreifen. Hierbei haben zumindest zwei Verriegelungsteile (91, 111) die gleiche Schwenkrichtung. Die Verriegelungsteile (91; 111) können beispielsweise starr miteinander verbunden sein und gemeinsam mittels eines Federelements (112) zum Verriegeln belastet werden. Auch in diesem Ausführungsbeispiel umgreift jedes Verriegelungsteil (91; 111) jeweils ein Führungselement (121; 131). Beim Verschwenken wird das Betätigungselement (91; 111) entlang dieses Führungselements (121; 131) geführt. Zum Lösen der Verriegelung wird eine Druckkraft entweder auf einen oder auf mehrere Taster ausgeübt. Die Übertragung der Kräfte auf die einzelnen Verriegelungsteile (91; 111) erfolgt, wie oben beschrieben.

Die Betätigung kann auch mittels eines z.B. um die Längsachse (11) schwenkbaren Scheibensegments mit nach außen ragender Nase erfolgen. Dieses kann Teil eines federbelasteten Verriegelungsteils (91, 111) sein oder dieses betätigen. Auch die Betätigung beider Verriegelungsteile (91, 11) mittels eines einzelnen Scheibensegments ist denkbar.

Bei allen Varianten ist auch die Zwischenschaltung eines elektrischen Antriebs und/oder eines Getriebes denkbar.

Es ist auch denkbar, den Adapter (10) derart auszubilden, dass ein Verriegelungsteil (91; 111) und das zugehörige Führungselement (121) im ersten Teil (20) oder im zweiten Teil (60) gelagert ist. Das zweite Verriegelungsteil (111; 91) und das zugehörige Führungselement (131) sind dann im jeweils anderen Teil (60; 20) gelagert. Entsprechend sind die Führungselementaufnahmen (47, 48) in dem Teil (60; 20) angeordnet, in dem das zugeordnete Führungselement (121; 131) nicht befestigt ist.

Der Adapter (10) kann auch mit mehr als zwei Verriegelungsteilen (91, 111) ausgebildet sein. Ein im Festteil (20) gelagertes und geführtes Verriegelungsteil (91, 111) hintergreift dann das Losteil (60). Ein im Losteil (60) gelagertes und geführtes Verriegelungsteil (91; 111) hintergreift das Festteil (20). Jedes der Verriegelungsteile (91, 111) ist mittels eines Führungselements (121; 131) geführt und einzeln, gruppenweise oder gemeinsam mit den anderen Verriegelungsteilen (91, 111) in der Verriegelungsrichtung federbelastet.

Auch Kombinationen der einzelnen Ausführungsbeispiele sind denkbar.

### Bezugszeichenliste:

- 10: Trennbarer Adapter
- 11: Längsachse
- 12: Längsrichtung
- 13: Montagerichtung von (60) relativ zu (20)

- 20: Festteil, erstes Teil
- 21: Befestigungsbohrungen
- 22: Zentrierbohrung
- 23: Stirnseite, Unterseite
- 24: Zentrierbund
- 25: Verschlussdeckel

- 31: Grundkörper
- 32: Boden
- 33: Ränder, Wandbereiche
- 34: Gruppen von Senkbohrungen
- 35: Senkbohrungen
- 36: Aufsetzflächen
- 37: Zentrierbohrungen
- 38: Einsenkungen

- 41: Begrenzungsflächen
- 42: Zylindermantel
- 43: Randsteg, Teil der Ringzentrierung (43, 81)
- 44: ebene Fläche
- 45: Befestigungsschrauben
- 46: Zentralbereich
- 47: Führungselementaufnahme
- 48: Führungselementaufnahme

- 51: Einsatzstücke
- 52: oberer Bereich von (51)
- 53: Umgriffsrand
- 54: Oberseite von (53)
- 55: Unterseite von (53)
- 56: Bodenfläche
- 57: Gewindebohrungen
- 58: Zentrierbolzenaufnahmen

- 60: Losteil, zweites Teil
- 61: Stirnseite
- 62: Werkzeugaufnahme
- 63: Zentrierausnehmung
- 64: Befestigungsbohrbild
- 65: Greif- oder Führungsausnehmung
- 66: Grundfläche
- 67: Führungsflächen
- 68: elektrisches Kabel
- 69: Stecker

- 71: Losteilkörper
- 72: Deckelteil
- 73: Abstützsteg
- 74: Losteilkörperrand
- 75: Auflagefläche

- 77: Innenseite
- 78: Verriegelungsteil-Aufnahmen
- 79: Kabelkanal

- 81: Zentrierring, Teil der Ringzentrierung (43, 81)
- 82: Gleitflächen
- 83: Gewindebohrung
- 84: Längsseiten
- 85: Federaufnahmen
- 86: Führungsnuten
- 89: Deckelblech

- 91: Verriegelungsteile
- 92: Griffflächen
- 93: Führungslangloch
- 94: Führungsleisten
- 95: Einsenkung
- 96: Haken
- 97: Hakenoberseite
- 98: Hakenunterseite
- 99: Einführschräge

- 101: Lösestellung
- 102: Löseanschlag
- 103: Verriegelungsstellung
- 104: Mitnahmezapfen, Teil der Zwangsführung (104, 115)
- 105: Steg

- 111: Verriegelungsteil
- 112: Federelemente, Druckfedern
- 113: Mitnahmezapfen, Teil der Zwangsführung (113, 116)
- 114: Taster
- 115: Mitnahmelangloch, Teil der Zwangsführung (104, 115)
- 116: Mitnahmelangloch, Tel der Zwangsführung (113, 116)
- 117: Griffteil
- 118: Federelemente, Druckfedern
- 119: Federelemente, Druckfedern

- 121: Führungselement, erstes Führungselement, Führungsbolzen
- 122: Außengewinde
- 123: Führungsbund
- 124: Auflagebund
- 125: Montageabschnitt
- 127: Schlüsselfläche
- 128: Führungsbolzenkopf
- 129: Kanal

- 131: Führungselement, zweites Führungselement, Führungselement
- 132: Außengewinde
- 133: Führungsbund
- 134: Auflagebund
- 135: Führungsbolzenkopf
- 136: Innensechskant
- 137: Kanal

## Patentansprüche

1. Verfahren zum manuellen oder automatisierten Trennen eines trennbaren Adapters (10) mit einem ersten Teil (20) und mit einem mit dem ersten Teil (20) lösbar verbundenen zweiten Teil (60), mit mindestens zwei federbelastet das erste Teil (20) oder das zweite Teil (60) hintergreifenden Verriegelungsteilen (91; 111), die in dem jeweils nicht hintergriffenen zweiten Teil (60) oder ersten Teil (20) verschiebbar oder verschwenkbar gelagert sind, wobei jedes der Verriegelungseiteile (91; 111) ein Führungselement (121; 131) umgreift, das in dem das Verriegelungsteil (91, 111) lagernden Teil (20; 60) angeordnet ist und das formschlüssig in jeweils eine Führungselementaufnahme (47; 48) eingreift, die in dem das Verriegelungsteil (91; 111) nicht lagernden Teil (20; 60) angeordnet ist,
- wobei alle Verriegelungsteile (91, 111) gleichzeitig relativ zum ersten Teil (20) und zum zweiten Teil (60) oder relativ zueinander mittels einer als Druckkraft aufgebrachten äußeren Kraft belastet werden,
- wobei jedes Verriegelungsteil (91, 111) mittels dieser äußeren Kraft relativ zum ersten Teil (20) und zum zweiten Teil (60) verschoben oder verschwenkt wird und hierbei die Belastung eines zumindest dieses Verriegelungsteil (91, 111) belastenden Federelements (112, 118, 119) zusätzlich erhöht wird,
- wobei bei diesem Verschieben oder Verschwenken des einzelnen Verriegelungsteils (91; 111) der Hintergriff dieses Verriegelungsteils (91; 111) mit dem ersten Teil (20) oder mit dem zweiten Teil (60) sich löst und
- wobei das erste Teil (10) und das zweite Teil (60) in einer entgegen einer in der Längsrichtung (12) des Adapters (10) orientierten Montagerichtung (13) voneinander getrennt werden, wobei die Führungselemente (121; 131) und die Führungselementaufnahmen (47, 48) außer Eingriff kommen.

2. Trennbarer Adapter (10) für die Adaption eines Werkzeugs an einem Industrieroboter, mit einem ersten Teil (20) und mit einem mit dem ersten Teil (20) lösbar verbundenen zweiten Teil (60), wobei im zweiten Teil (60) mindestens ein federbelastetes Verriegelungsteil (91; 111) verschiebbar oder verschwenkbar gelagert ist, das das erste Teil (20) zumindest kontaktiert, wobei
- im ersten Teil (20) oder im zweiten Teil (60) mindestens ein zweites, federbelastetes Verriegelungsteil (111; 91) verschiebbar oder verschwenkbar gelagert ist,
- jedes der Verriegelungsteile (91, 111) dasjenige Teil (20; 60) hintergreift, das dieses Verriegelungsteil (91; 111) nicht lagert,
- jedes der Verriegelungsteile (91; 111) jeweils ein Führungselement (121; 131) umgreift, das in dem das Verriegelungsteil (91, 111) lagernden Teil (20; 60) angeordnet ist und
- jedes der Führungselemente (121; 131) formschlüssig in jeweils eine Führungselementaufnahme (47; 48) eingreift, die in dem das Verriegelungsteil (91; 111) nicht lagernden Teil (20; 60) angeordnet ist.

3. Trennbarer Adapter (10) nach Anspruch 2, **dadurch gekennzeichnet, dass** die beiden Führungselemente (121, 131) unterschiedliche Gestalten aufweisen.

4. Trennbarer Adapter (10) nach Anspruch 2, **dadurch gekennzeichnet, dass** die mindestens zwei Verriegelungsteile (91, 111) in einer Ebene normal zur Längsachse (11) des Adapters (10) relativ zueinander versetzt sind.

5. Trennbarer Adapter (10) nach Anspruch 2, **dadurch gekennzeichnet, dass** das erste Teil (20) und/oder das zweite Teil (60) einen Grundkörper (31) und mindestens ein einen Randabschnitt bildendes Einsatzstück (51) aufweist.

6. Trennbarer Adapter (10) nach Anspruch 5, dass der Elastizitätsmodul des einzelnen Einsatzstücks (51) mindestens doppelt so groß ist wie der Elastizitätsmoduls des Grundkörpers (31).

7. Trennbarer Adapter (10) nach Anspruch 2, **dadurch gekennzeichnet, dass** er mindestens eine außenliegende Grifffläche (92) zur Betätigung der Verriegelungsteile (91, 111) hat, die in radialer Richtung über die Hüllkontur des ersten Teils (20) und/oder des zweiten Teils (60) herausragt.

8. Trennbarer Adapter (10) nach Anspruch 2, **dadurch gekennzeichnet, dass** das erste Teil (20) und/oder das zweite Teil (60) an seiner Mantelfläche Greif- oder Führungsausnehmungen (65) aufweist.

9. Trennbarer Adapter (10) nach Anspruch 2, **dadurch gekennzeichnet, dass** in der Trennfuge zwischen dem ersten Teil (20) und dem zweiten Teil (60) eine Ringzentrierung (43, 81) ausgebildet ist.

10. Trennbarer Adapter (10) nach Anspruch 2, **dadurch gekennzeichnet, dass** seine beiden Stirnseiten (23, 61) komplementär zueinander ausgebildet sind.

## Claims

1. A method for the manual or automated disconnection of a disconnectable adapter (10) having a first part (20) and a second part (60) connected detachably to the first part (20), having at least two locking parts (91; 111) which engage behind the first part (20) or the second part (60) in a spring-loaded manner and are mounted displaceably or pivotably in the second part (60) or first part (20) behind which they do not engage, wherein each of the locking parts (91; 111) fits around a guide element (121; 131) which is arranged in the part (20; 60) supporting the locking part (91, 111) and engages form-fittingly in one guide element receptacle (47; 48) in each case, which is arranged in the part (20; 60) which does not support the locking part (91; 111),
- wherein all the locking parts (91, 111) are loaded simultaneously relative to the first part (20) and to the second part (60) or relative to one another by means of an external force applied as a compressive force,
- wherein each locking part (91, 111) is displaced or pivoted relative to the first part (20) and to the second part (60) by means of this external force, and in the process the loading of a spring element (112, 118, 119) loading at least this locking part (91, 111) is additionally increased,
- wherein during this displacement or pivoting of the individual locking part (91; 111), the engagement of this locking part (91; 111) behind the first part (20) or behind the second part (60) is undone, and
- wherein the first part (10) and the second part (60) are disconnected from one another counter to an assembly direction (13) oriented in the longitudinal direction (12) of the adapter (10), wherein the guide elements (121; 131) and the guide element receptacles (47, 48) disengage.

2. A disconnectable adapter (10) for the adaptation of a tool to an industrial robot, having a first part (20) and a second part (60) connected detachably to the first part (20), wherein at least one spring-loaded locking part (91; 111) which at least contacts the first part (20) is mounted displaceably or pivotably in the second part (60), wherein
- at least one second spring-loaded locking part (111; 91) is mounted displaceably or pivotably in the first part (20) or in the second part (60),
- each of the locking parts (91, 111) engages behind the part (20; 60) which does not support this locking part (91; 111),
- each of the locking parts (91; 111) fits around one guide element (121; 131) each, which is arranged in the part (20; 60) which supports the locking part (91, 111), and
- each of the guide elements (121; 131) engages form-fittingly in one guide element receptacle (47; 48) each, which is arranged in the part (20; 60) which does not support the locking part (91; 111).

3. The disconnectable adapter (10) according to Claim 2, **characterised in that**
the two guide elements (121, 131) have different shapes.

4. The disconnectable adapter (10) according to Claim 2, **characterised in that**
the at least two locking parts (91, 111) are offset from one another in a plane normal to the longitudinal axis (11) of the adapter (10).

5. The disconnectable adapter (10) according to Claim 2, **characterised in that**
the first part (20) and/or the second part (60) has a main body (31) and at least one insert piece (51) which forms an edge section.

6. The disconnectable adapter (10) according to Claim 5, that the modulus of elasticity of the individual insert piece (51) is at least twice the modulus of elasticity of the main body (31).

7. The disconnectable adapter (10) according to Claim 2, **characterised in that**
it has at least one external grip face (92) for actuating the locking parts (91, 111), which grip face protrudes in the radial direction beyond the envelope contour of the first part (20) and/or of the second part (60).

8. The disconnectable adapter (10) according to Claim 2, **characterised in that**
the first part (20) and/or the second part (60) has grip or guide recesses (65) in its lateral face.

9. The disconnectable adapter (10) according to Claim 2, **characterised in that**
an annular centring means (43, 81) is formed in the joint between the first part (20) and the second part (60) .

10. The disconnectable adapter (10) according to Claim 2, **characterised in that**
its two end faces (23, 61) are complementary to one another.

## Revendications

1. Procédé, destiné à dissocier de manière manuelle ou automatique un adaptateur (10) dissociable, pourvu d'une première partie (20) et d'une deuxième partie (60) assemblée de manière amovible avec la première partie (20), pourvu d'au moins deux pièces de verrouillage (91 ; 111), retenant par l'arrière en étant contraintes par ressort la première partie (20) ou la deuxième partie (60), qui sont logées en étant déplaçables ou pivotantes dans la deuxième partie (60) ou la première partie (20) respectivement non retenue par l'arrière, chacune des pièces de verrouillage (91 ; 111) entourant un élément de guidage (121 ; 131) qui est placé dans la partie (20 ; 60) logeant la pièce de verrouillage (91, 111) et qui s'engage par complémentarité de forme dans respectivement un réceptacle (47 ; 48) d'élément de guidage qui est placé dans la partie (20 ; 60) ne logeant pas la pièce de verrouillage (91 ; 111),
- toutes les pièces de verrouillage (91, 111) étant contraintes simultanément par rapport à la première partie (20) et par rapport à la deuxième partie (60) ou l'une par rapport à l'autre au moyen d'une force extérieure appliquée sous la forme d'une force de pression,
- chaque pièce de verrouillage (91, 111) étant déplacée ou pivotée au moyen de ladite force extérieure par rapport à la première partie (20) et par rapport à la deuxième partie (60) et à cet effet, la contrainte d'un élément à ressort (112, 118, 119) contraignant au moins ladite pièce de verrouillage (91, 111) étant additionnellement augmentée,
- lors dudit déplacement ou pivotement de la pièce de verrouillage (91 ; 111) individuelle, la retenue par l'arrière de ladite pièce de verrouillage (91 ; 111) avec la première partie (20) ou avec la deuxième partie (60) se désolidarisant et
- la première partie (10) et la deuxième partie (60) étant dissociées l'une de l'autre à l'encontre d'une direction de montage (13) orientée dans la direction longitudinale (12) de l'adaptateur (10), les éléments de guidage (121 ; 131) et les réceptacles (47, 48) d'éléments de guidage se désengageant mutuellement.

2. Adaptateur dissociable (10), destiné à adapter un outil sur un robot industriel, pourvu d'une première partie (20) et d'une deuxième partie (60) assemblée de manière amovible avec la première partie (20), au moins une pièce de verrouillage (91 ; 111) contrainte par ressort qui entre au moins en contact avec la première partie (20) étant logée de manière déplaçable ou pivotante dans la deuxième partie (60),
- dans la première partie (20) ou dans la deuxième partie (60), au moins une deuxième pièce de verrouillage (111 ; 91) contrainte par ressort étant logée de manière déplaçable ou pivotante,
- chacune des pièces de verrouillage (91, 111) retenant par l'arrière la partie (20 ; 60) ne logeant pas ladite pièce de verrouillage (91 ; 111),
- chacune des pièces de verrouillage (91 ; 111) entourant respectivement un élément de guidage (121 ; 131) qui est placé dans la partie (20 ; 60) ne logeant pas la pièce de verrouillage (91, 111) et
- chacun des éléments de guidage (121 ; 131) s'engageant par complémentarité de forme dans respectivement un réceptacle (47 ; 48) d'élément de guidage qui est placé dans la partie (20 ; 60) ne logeant pas la pièce de verrouillage (91, 111).

3. Adaptateur dissociable (10) selon la revendication 2, **caractérisé en ce que** les deux éléments de guidage (121, 131) présentent des formes différentes.

4. Adaptateur dissociable (10) selon la revendication 2, **caractérisé en ce que** les au moins deux pièces de verrouillage (91, 111) sont décalées l'une par rapport à l'autre dans un plan à la normale de l'axe longitudinal (11) de l'adaptateur (10).

5. Adaptateur dissociable (10) selon la revendication 2, **caractérisé en ce que** la première partie (20) et / ou la deuxième partie (60) comporte un corps de base (31) et au moins une pièce d'insertion (51) formant une section de bordure.

6. Adaptateur dissociable (10) selon la revendication 5, **caractérisé en ce que** le module d'élasticité de la pièce d'insertion (51) individuelle correspond au moins au double du module d'élasticité du corps de base (31).

7. Adaptateur dissociable (10) selon la revendication 2, **caractérisé en ce qu'**il dispose d'au moins une surface de préhension (92) située à l'extérieur pour l'actionnement des pièces de verrouillage (91, 111), qui en direction radiale saillit au-delà du contour d'enveloppe de la première partie (20) et / ou de la deuxième partie (60).

8. Adaptateur dissociable (10) selon la revendication 2, **caractérisé en ce que** la première partie (20) et / ou la deuxième partie (60) comporte sur sa surface enveloppante des évidements (65) de préhension ou de guidage.

9. Adaptateur dissociable (10) selon la revendication 2, **caractérisé en ce que** dans le joint de dissociation entre la première partie (20) et la deuxième partie (60) est constitué un centrage annulaire (43, 81).

10. Adaptateur dissociable (10) selon la revendication 2, **caractérisé en ce que** ses deux faces frontales (23, 61) sont constituées de manière complémentaire l'une par rapport à l'autre.
